# FASCICULE DE BREVET EUROPEEN

(11) **EP 3 674 204 B1**
(45) Date de publication et mention de la délivrance du brevet: **08.09.2021**
(21) Numéro de dépôt: 19219278.9
(22) Date de dépôt: 23.12.2019
(51) Int. Cl.: B64C 3/26, B64C 1/12, B64C 1/26, B64F 5/10, B64C 1/06

(54) **VOILURE D'AÉRONEF COMPRENANT DEUX AILES FIXÉES L'UNE SUR L'AUTRE**
ZWEI ANEINANDER BEFESTIGTE FLÜGEL EINES LUFTFAHRZEUGS
AIRCRAFT WING UNIT COMPRISING TWO WINGS ATTACHED TO ONE ANOTHER

(30) Priorité: 26.12.2018 FR 1874143
(43) Date de publication de la demande: 01.07.2020
(73) Titulaire: Airbus Operations SAS, 31060 Toulouse (FR)
(72) Inventeur: GAUTHIE, Laurent, 31170 TOURNEFEUILLE (FR)
(74) Mandataire: Brevalex

(56) Documents cités:
- GB-A- 2 435 457
- JP-A- 2008 114 707
- RU-C1- 2 481 243
- US-A1- 2012 043 422
- US-A1- 2014 084 110
- US-A1- 2014 158 828

## Description

### DOMAINE TECHNIQUE

L'invention se rapporte au domaine des voilures d'aéronef, et en particulier à la fixation des deux ailes de cette voilure sur le fuselage.

L'invention s'applique à tout type d'aéronef, en particulier aux avions commerciaux et militaires.

### TECHNIQUE ANTERIEURE

Les deux ailes d'un aéronef sont habituellement fixées séparément l'une de l'autre, sur l'ossature de cet aéronef. Plus précisément, le fuselage de l'aéronef comporte une ossature au sein de laquelle est intégré un caisson central de voilure, aux extrémités latérales duquel sont respectivement fixées les deux ailes.

Une telle conception de voilure d'aéronef, bien que largement répandue et notamment connue des documents FR 2 948 099 A1 et GB 2 435 547 A, nécessite un temps élevé d'assemblage des ailes sur le caisson central.

### EXPOSÉ DE L'INVENTION

Pour répondre à l'inconvénient mentionné ci-dessus, l'invention a tout d'abord pour objet un aéronef selon la revendication 1.

L'invention rompt ainsi radicalement avec les conceptions antérieures, en prévoyant de relier directement les deux ailes l'une sur l'autre. Cette particularité est obtenue en intégrant un demi-caisson central de voilure sur chaque aile, et en reliant par boulons les extrémités intérieures de ces deux demi-caissons. Une fois que ces deux extrémités sont fixées l'une sur l'autre, le caisson central de voilure est reconstitué. De plus, la tenue mécanique de l'assemblage comprenant les deux demi-caissons de voilure est renforcée par la présence de la paroi intermédiaire traversée par les boulons.

L'assemblage de la voilure s'en trouve ainsi avantageusement simplifié, et renforcé.

L'invention prévoit de préférence au moins l'une des caractéristiques optionnelles suivantes, prises isolément ou en combinaison.

Les boulons de fixation sont répartis tout le long des extrémités intérieures des deux demi-caissons centraux de voilure, ces extrémités présentant de préférence une forme générale rectangulaire.

L'extrémité intérieure de chaque demi-caisson central de voilure présente des ferrures de fixation traversées par les boulons de fixation, les ferrures de fixation étant disposées sur une surface intérieure du demi-caisson central de voilure et sur une surface extérieure de celui-ci.

Chaque aile comporte une nervure transversale intérieure entre son caisson latéral de voilure et son demi-caisson central de voilure.

Chaque demi-caisson central de voilure présente une section grandissante en allant vers son extrémité intérieure.

De préférence, l'aéronef comprend en outre un troisième cadre de fuselage dont une partie inférieure est également en forme de paroi de cadre, le troisième cadre étant agencé de sorte que le second cadre se trouve agencé entre les premier et troisième cadres selon une direction longitudinale de l'aéronef, et les deux parois de cadre des second et troisième cadres sont raccordées par une paroi intermédiaire s'inscrivant dans le plan vertical médian de l'aéronef.

Dans cette réalisation, les deux parois intermédiaires sont deux pièces distinctes l'une de l'autre, agencées de part et d'autre de la paroi de cadre du second cadre, ou les deux parois intermédiaires sont réalisées à l'aide d'une même pièce, de part et d'autre de laquelle sont agencées deux parties de la paroi de cadre du second cadre de fuselage.

De préférence, au moins l'une des ferrures de fixation de l'extrémité intérieure de chaque demi-caisson central de voilure comporte :
- une première partie traversée par au moins l'un desdits boulons de fixation traversant également la paroi intermédiaire ;
- une seconde partie traversée par au moins un boulon additionnel traversant également la paroi de cadre de l'un des premier et second cadres;
- une troisième partie traversée par au moins un boulon additionnel traversant également un élément de caisson du demi-caisson central de voilure, les première, seconde et troisième parties de la ferrure de fixation étant orthogonales entre elles de manière à former une ferrure de coin.

De préférence, la paroi de cadre de celui des premier et second cadres de fuselage qui se situe le plus en arrière, forme une délimitation avant d'une case de train d'atterrissage principal.

De préférence, chacun des premier et second cadres de fuselage est fixé à une plaque de distribution d'efforts présentant des chants latéraux fixés à une peau de fuselage. Il en est préférentiellement de même pour le troisième cadre de fuselage, lorsque celui-ci est prévu et mis en œuvre de la manière exposée ci-dessus.

De préférence, les boulons de fixation sont orientés parallèlement à une direction transversale de l'aéronef.

Enfin, l'invention a pour objet un procédé d'assemblage d'un aéronef comprenant une étape d'assemblage des deux ailes l'une sur l'autre, à l'aide des boulons de fixation reliant les extrémités intérieures des deux demi-caissons centraux de voilure, et traversant la paroi intermédiaire.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue en plan de face d'un aéronef selon l'invention ;
[Fig. 2] représente une vue en perspective d'une partie de l'une des deux ailes de l'aéronef montré sur le figure précédente ;
[Fig. 3] représente une vue en perspective de la partie structurale de l'aile montrée sur la figure précédente ;
[Fig. 4] représente une vue agrandie en perspective d'une portion de la partie structurale de l'aile montrée sur la figure précédente ;
[Fig. 5] représente une vue en coupe d'une partie du demi-caisson central de voilure de l'aile montrée sur les figures 2 à 5, selon le plan de coupe P1 de la figure 2 ;
[Fig. 6] représente une vue en perspective de l'ossature de fuselage sur laquelle est destinée à être fixée la voilure montrée sur les figures précédentes ;
[Fig. 7] est vue de côté de l'ossature montrée sur la figure 6 ;
[Fig. 8] est une vue agrandie en perspective d'une partie centrale de l'ossature de fuselage destinée à recevoir la voilure de l'aéronef;
[Fig. 9] représente une vue en perspective de l'association entre l'ossature de fuselage des figures 6 à 8, et les ailes des figures 2 à 5 ;
[Fig. 9a] représente une vue en perspective de l'ossature de fuselage montrée sur la figure 9 ;
[Fig. 9b] est une vue en perspective similaire à celle de la figure précédente, schématisant la reprise des efforts axiaux ;
[Fig. 9c] représente une vue similaire à celle des figures 9a et 9b, sur laquelle a été représenté des poutres transversales de plancher ;
[Fig. 10] représente une vue en perspective similaire à la précédente, selon un autre angle de vue ;
[Fig. 11] représente une vue en coupe de l'association montrée sur les figures 9 et 10, selon le plan de coupe P2 de la figure 9 ;
[Fig. 12] représente une vue en perspective de l'une des ferrures de coin reliant le demi-caisson central de voilure à l'un des cadres de fuselage ;
[Fig. 13] représente une vue en perspective similaire à celle de la figure précédente, montrant une autre ferrure de coin ; et
[Fig. 14] représente une vue en coupe transversale de l'association montrée sur la figure 9.

### DESCRIPTION DETAILLEE

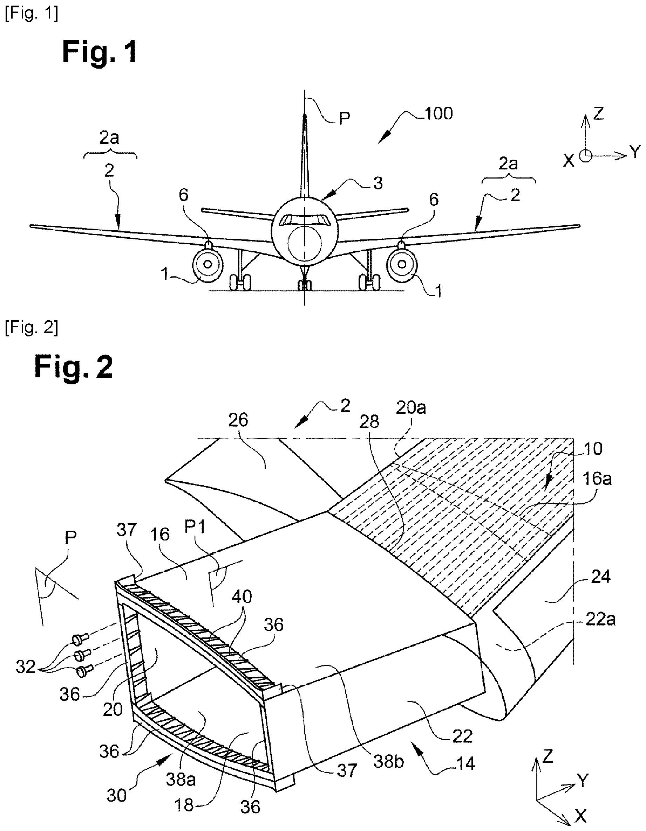

En référence à la figure 1, il est représenté un aéronef 100 comprenant un fuselage 3, et deux ailes 2 formant la voilure 2a de l'aéronef. Ces ailes 2 sont fixées sur une ossature du fuselage, et également fixées directement l'une sur l'autre comme cela sera détaillé ci-après. Elles portent chacune une turbomachine 1 tel qu'un turboréacteur, via un mât d'accrochage 6. De préférence, chaque aile 2 présente une partie aérodynamique dont l'envergure dépasse 20 mètres.

Dans toute la description qui va suivre, la direction X correspond à la direction longitudinale de l'aéronef, la direction Y correspond à sa direction transversale, tandis que la direction Z correspondant à la direction verticale ou direction de la hauteur. Ces trois directions X, Y et Z sont orthogonales entre elles.

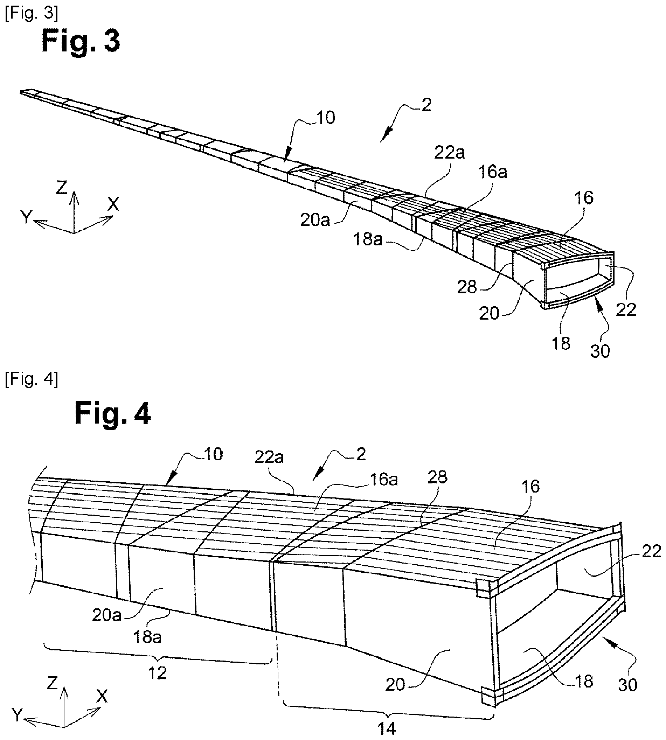

En référence à présent aux figures 2 à 4, il est représenté de manière plus détaillée une partie de l'une des deux ailes 2. L'autre aile présente une conception identique, symétrique par rapport à un plan vertical médian P de l'aéronef, intégrant son axe central longitudinal.

L'aile 2 comprend une partie structurale 10 composée par un caisson latéral de voilure 12, et par un demi-caisson central de voilure 14 prolongeant le caisson 12 transversalement vers l'intérieur. Le caisson 12 et le demi-caisson 14 sont ainsi intégrés au sein d'une même structure qui est ensuite destinée à être assemblée sur l'ossature du fuselage. Chacun d'eux présente une section transversale de forme générale parallélépipédique, et une continuité de forme est retenue au niveau de la jonction entre le caisson 12 et le demi-caisson 14. A cet égard, il est noté que le demi-caisson central de voilure 14 présente un longeron supérieur 16, un longeron inférieur 18, un longeron arrière 20 ainsi qu'un longeron avant 22. Il est noté que les longerons supérieur 16 et inférieur 18 sont aussi dénommés panneaux supérieur et inférieur, respectivement. Néanmoins, dans la suite de la description, il sera fait référence à des longerons supérieur et inférieur.

Il en est de même pour le caisson latéral de voilure 12, dont les éléments correspondant ont été identifiés avec la même référence numérique, suivie de l'extension « a ». Ainsi, les deux longerons supérieurs 16, 16a se situent dans la continuité l'un de l'autre. Ils peuvent être réalisés à l'aide de plusieurs éléments fixés les uns aux autres, ou bien à l'aide d'une unique pièce réalisée d'un seul tenant. Il en est de même pour les longerons inférieurs 18, 18a, pour les longerons arrière 20, 20a, et pour les longerons avant 22, 22a.

Le demi-caisson central de voilure 14 est prévu pour être fixé dans l'ossature du fuselage. En revanche, le caisson latéral de voilure 12 correspond à la partie de l'aile destinée à faire saillie du fuselage, en portant des portions aérodynamiques comme un bord d'attaque 24 et un bord de fuite 26, représentés sur la figure 2.

Le caisson latéral de voilure 12 s'étend selon une direction d'envergure présentant une inclinaison par rapport à la direction Y, tandis que le demi-caisson central de voilure 14 s'étend selon cette même direction Y. En d'autres termes, un axe central longitudinal du demi-caisson 14, de forme générale parallélépipédique, est sensiblement parallèle à la direction Y. Selon une alternative, les deux longerons avant 22, 22a pourraient tous les deux être agencés selon la direction d'envergure de l'aile, toujours dans la continuité l'un de l'autre.

Des nervures transversales intérieures équipent le caisson 12 et le demi-caisson 14. Parmi elles, une nervure transversale 28 située à la jonction entre le caisson 12 et le demi-caisson 14, c'est-à-dire au niveau de la cassure marquée par la différence d'orientation entre ces deux éléments 12, 14 formant la partie structurale 10 de l'aile.

Le demi-caisson 14 présente une section transversale, dans un plan XZ, qui grandit en allant vers l'intérieur. De préférence, cette augmentation de section est obtenue est prévoyant un longeron supérieur 16 sensiblement plan et sensiblement parallèle à un plan YZ, tandis que le longeron inférieur 18 présente une inclinaison de manière à s'étendre vers le bas en allant vers l'intérieur. Le maintien d'un longeron supérieur 16 sensiblement plan et parallèle à un plan YZ permet d'implanter facilement le plancher de la cabine passager au-dessus de ce longeron, en fixant des éléments de plancher comme des longerons et/ou des traverses sur la surface supérieure de ce longeron 16. En outre, l'inclinaison du longeron inférieur 18 permet de disposer d'un demi-caisson 14 dont l'extrémité intérieure 30 présente une dimension plus élevée que l'extrémité extérieure correspondant à la jonction avec le caisson latéral 12. Comme cette extrémité intérieure 30 est destinée à être fixée sur l'ossature du fuselage, sa grande dimension permet d'optimiser la jonction mécanique entre ces deux éléments. De plus, tout ou partie de l'intérieur du caisson étant destiné à stocker du carburant, cet agrandissement du demi-caisson 14 permet d'augmenter la capacité de stockage du carburant.

L'extrémité intérieure 30 du demi-caisson 14, correspondant à la partie de ce dernier se situant la plus proche du plan vertical médian P selon la direction Y, présente une forme générale rectangulaire. Comme cela sera décrit ci-après, c'est cette extrémité intérieure 30 qui est destinée à être fixée sur l'ossature de fuselage et sur l'extrémité intérieure de l'autre aile, à l'aide de boulons de fixation 32. Ces boulons, dont certains ont été représentés sur la figure 2, sont répartis tout le long de l'extrémité intérieure 30 du demi-caisson 14. Par conséquent, des boulons de fixation 32 coopèrent avec chacun des longerons 16, 18, 20, 22 du demi-caisson. Les boulons de fixation 32 présentent des caractéristiques techniques adaptées à chaque besoin local. Il peut s'agir de boulons de cisaillement, de boulons de traction, ou bien de boulons de cisaillement et de traction.

Pour ce faire, au niveau de l'extrémité intérieure 30, les longerons 16, 18, 20, 22 sont équipés de ferrures de fixation 36 montées sur la surface intérieure 38a et sur la surface extérieure 38b du demi-caisson 14. Plus précisément, une ou plusieurs ferrures de fixation 36 sont disposées et montées sur la surface intérieure et/ou sur la surface extérieure de chacun des quatre longerons 16, 18, 20, 22. Dans l'exemple représenté sur les figures, les longerons supérieur 16 et inférieur 18 sont équipés de ferrures de fixation 36 disposées sur leur surfaces intérieure et extérieure, tandis que les longerons arrière 20 et avant 22 sont équipés de ferrures de fixation 36 disposées sur leur surface intérieure uniquement.

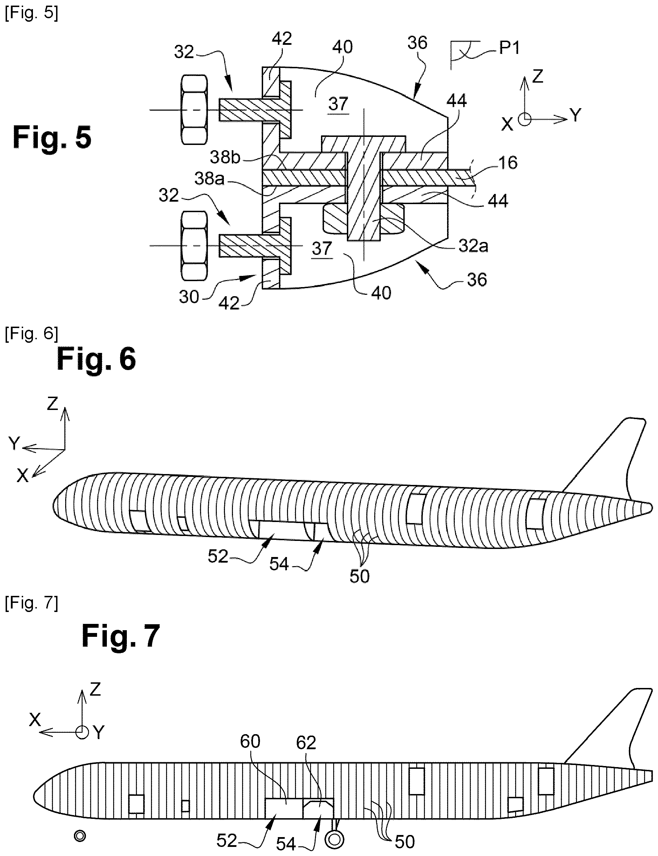

En référence à la figure 5 représentant l'extrémité intérieure du longeron supérieur 16, il est montré que cette extrémité est en effet équipée de deux ferrures de fixation 36 agencée de part et d'autre, à savoir sur la surface extérieure 38b et sur la surface intérieure 38a. Chaque ferrure 36 présente une section de forme globale de L, avec des nervures 40 reliant la branche libre et la base du L. Entre les nervures 40, chaque ferrure 36 définit un espace 37 logeant un ou plusieurs boulons de fixation 32 traversant la branche libre 42 du L. Cet espace 37 loge également un ou plusieurs boulons additionnels 32a fixant la base 44 du L sur le longeron 16. Un même boulon additionnel 32a peut enserrer le longeron 16 et la base 44 des deux ferrures 36 situées de part et d'autre de ce longeron, comme cela a été représenté sur la figure 5.

Les boulons de fixation 32 s'étendent ainsi tout le long de l'extrémité intérieure 30 du demi-caisson de voilure 14, en suivant une ligne sensiblement rectangulaire correspondant à la forme de cette extrémité 30. Le nombre de ces boulons 32 peut être élevé, par exemple supérieur à cent.

Les figures 6 et 7 représentent l'ossature de fuselage de l'aéronef, cette ossature étant en particulier équipée de cadres de fuselage 50 agencés dans des plans transversaux YZ, et espacés les uns des autres selon la direction X. Au niveau d'une partie centrale de cette ossature, une zone inférieure 52 est dédiée à la réception de la voilure. Cette zone 52 est adjacente à une case de train d'atterrissage principal 54, située en arrière de la zone 52 recevant les ailes.

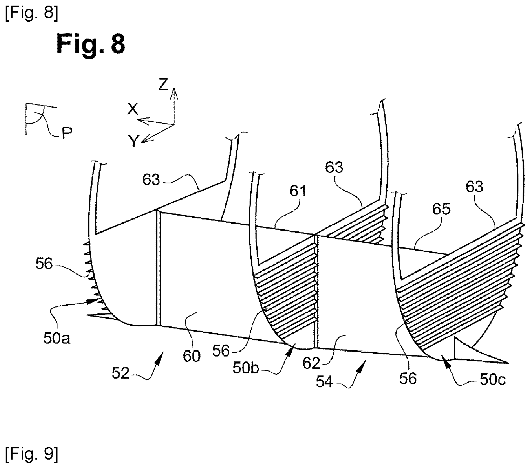

Plus précisément et en référence à la figure 8, il est représenté trois cadres de fuselage répartis selon la direction X, ces trois cadres étant respectivement référencés 50a, 50b, 50c, de l'avant vers l'arrière. Ces trois cadres sont des cadres dits « forts », en ce sens qu'ils participent activement à la reprise et au transfert des efforts au sein de la structure. D'autres cadres, non représentés et dits « courants », peuvent néanmoins être interposés entre les cadres forts 50a-50c. Ils participent également à la reprise et au transfert des efforts, mais dans une moindre mesure par rapport aux cadres forts. Ces derniers sont disposés de telle sorte que le second cadre 50b soit agencé entre les premier et troisième cadres 50a, 50c, selon la direction X.

Chaque cadre 50a-50c présente une forme générale sensiblement circulaire ou ovale, avec une partie supérieure ouverte et une partie inférieure formant une paroi pleine 56. Ces parois 56 s'inscrivent également dans des plans transversaux YZ. Elles peuvent être renforcées, notamment dans le but de former des fonds étanches dans le cas de la paroi avant 50a, et de la paroi arrière 50c.

Dans la direction X, les parois 56 des deux premiers cadres de fuselage 50a, 50b délimitent la zone 52 de réception des ailes, tandis que les parois 56 des deux cadres 50b, 50c le plus en arrière délimitent la case 54 de réception du train d'atterrissage principal. Ces deux zones 52, 54 ne sont pas pressurisées.

Les parois 56 des deux premiers cadres de fuselage 50a, 50b sont raccordées fixement par une paroi intermédiaire 60, qui s'inscrit dans le plan vertical médian P de l'aéronef. La hauteur de cette paroi intermédiaire 60 correspond à la hauteur des parois de cadre 56 dans le plan considéré. Sa fixation s'effectue par des moyens conventionnels, par exemple des cornières et des boulons. Le chant supérieur 61 de la paroi intermédiaire verticale 60 se trouve sensiblement dans un même plan XY que celui du chant supérieur 63 des deux parois de cadre 56.

De manière analogue, les parois 56 des deux derniers cadres de fuselage 50b, 50c sont raccordées fixement par une autre paroi intermédiaire 62, qui s'inscrit également dans le plan vertical médian P de l'aéronef. La hauteur de cette paroi intermédiaire 62 correspond aussi à la hauteur des parois de cadre 56. Sa fixation s'effectue par des moyens conventionnels, par exemple des cornières et des boulons. Le chant supérieur 65 de cette paroi intermédiaire verticale 62 se trouve donc sensiblement dans le même plan XY que celui du chant supérieur 63 des deux parois de cadre 56. A cet égard, il est noté que le plan XY précité correspond sensiblement au plan dans lequel s'inscrit également un plancher de l'aéronef, par exemple le plancher de la cabine passager. Les chants supérieurs 61, 63, 65 peuvent ainsi servir de support pour l'implantation d'éléments de plancher (non représentés), tels que des longerons ou des traverses.

Dans l'exemple montré sur la figure 8, les parois intermédiaires 60, 62 sont deux pièces distinctes interrompues par la paroi 56 du cadre du milieu 50b, dit second cadre. Une autre solution peut consister à prévoir une même pièce pour former les deux parois intermédiaires 60, 62, et de concevoir la paroi 56 du cadre du milieu 50b en deux parties, agencées respectivement de part et d'autre de cette nouvelle pièce unique orientée dans le plan P.

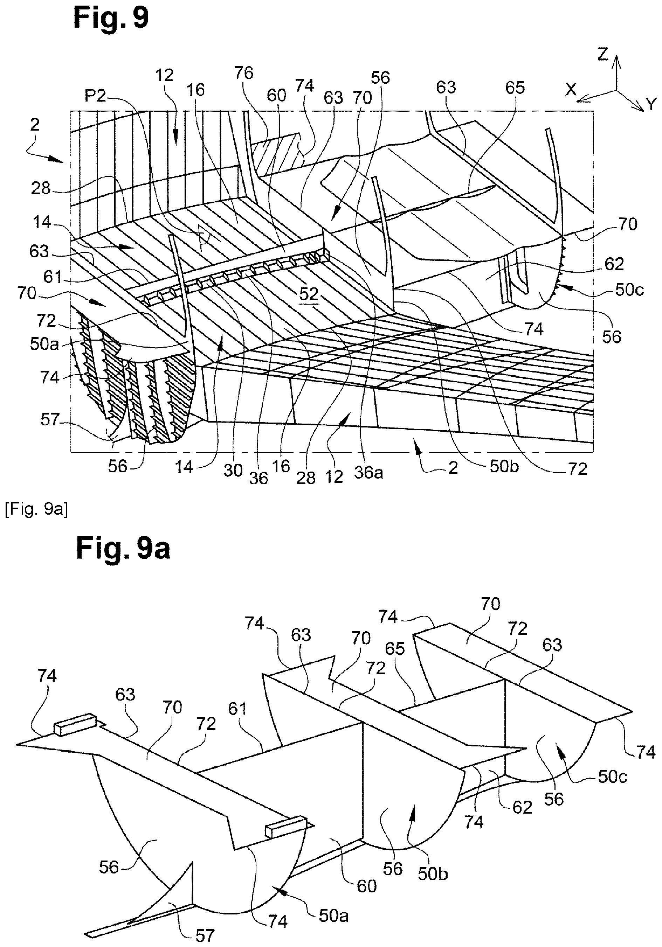

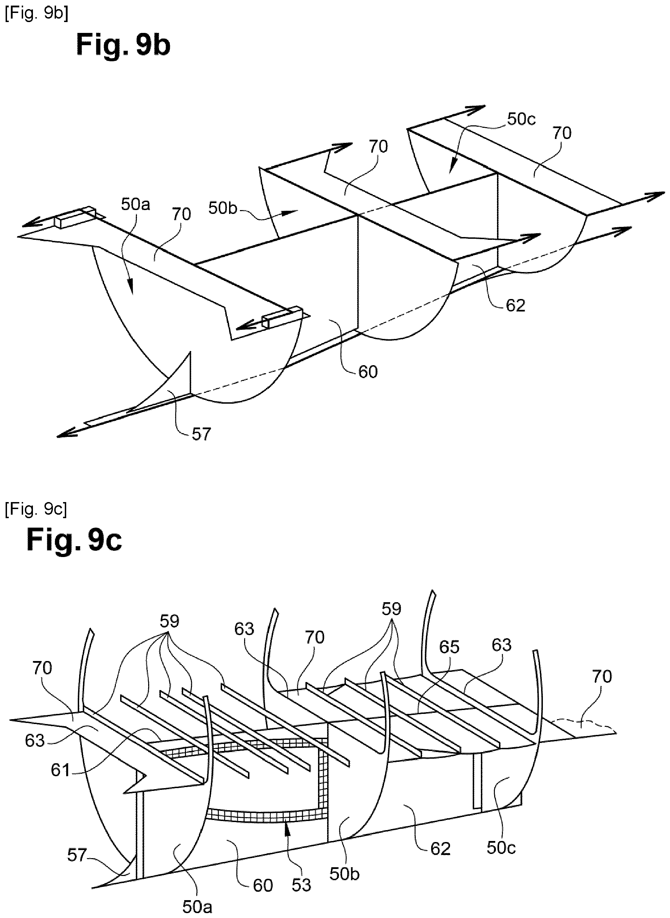

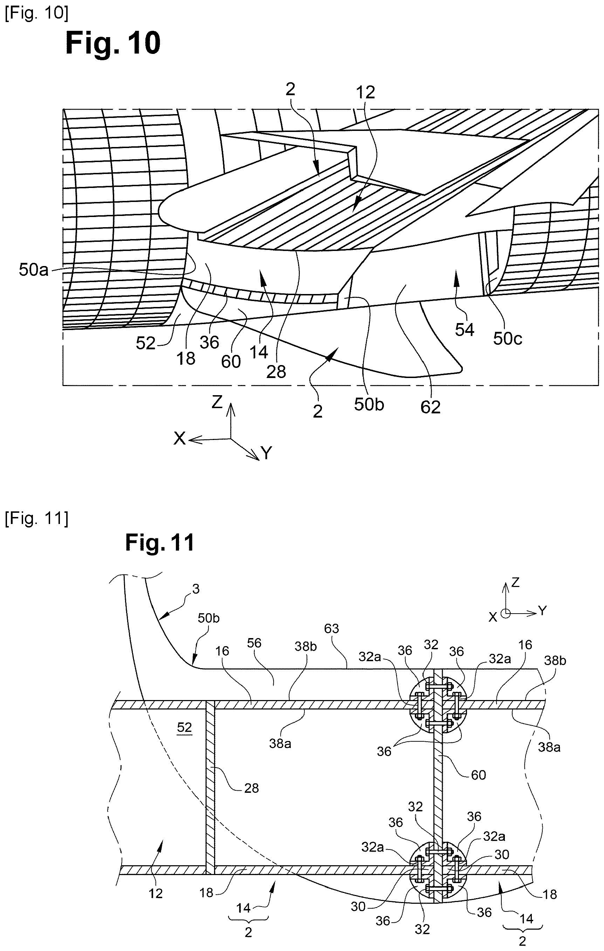

En référence aux figures 9 à 11, il est représenté l'implantation des deux ailes 2 dans la zone inférieure 52, entre les deux parois de cadre 56 des deux cadres 50a, 50b. Comme cela est le mieux visible sur la figure 11 (sur laquelle le longeron inférieur 18 de chaque demi-caisson 14 a été représenté non-incliné), les deux extrémités intérieures 30 des deux demi-caissons 14 sont bien reliées par les boulons de fixation 32 qui traversent non seulement les ferrures de fixation 36, mais également la paroi intermédiaire verticale 60. Les boulons de fixation 32 sont d'ailleurs préférentiellement orientés selon la direction Y, à savoir sensiblement orthogonalement à la paroi intermédiaire 60 qu'ils traversent.

Grâce à cette conception, les efforts selon la direction X transitent des demi-caissons centraux de voilure 14 vers la paroi intermédiaire 60, qui diffuse ensuite ces efforts axiaux dans les autres éléments de l'ossature du fuselage. Par exemple, les trois cadres 50a-50c peuvent être chacun associé à une plaque de distribution d'efforts comme montré sur les figures 9 et 9a. Chaque plaque de distribution d'efforts 70 s'étend préférentiellement dans un plan XY, correspondant au plan des chants supérieurs 61, 63, 65, ou à un plan parallèle légèrement plus bas. Chaque plaque 70 comporte ainsi un chant 72 proche et parallèle au chant supérieur 63 de sa paroi de cadre associée 56, sur laquelle est fixé ce chant 72. A partir de ce dernier, la plaque 70 s'étend vers l'avant ou vers l'arrière en présentant des chants latéraux 74 fixés sur la peau 76 du fuselage, uniquement représentée de manière sommaire et schématique. Après avoir transité par la paroi intermédiaire 60, les parois de cadre 56, et les plaques de distribution 70 associées aux deux cadres de fuselage 50a, 50b, les efforts axiaux peuvent ensuite se répartir dans la peau de fuselage entourant l'ossature. De la même manière, après avoir été introduits dans le cadre du milieu 50b, les efforts axiaux diffusent vers l'arrière dans la paroi intermédiaire 62, dans la paroi 56 du cadre 50c, puis dans la plaque de distribution d'efforts 70 fixée sur ce cadre arrière 50c.

Les figures 9 et 9a montrent également qu'à l'avant de la paroi 56 du premier cadre de fuselage 50a, il est prévu en partie inférieure un voile 57 qui participe à la reprise des efforts axiaux. En effet, ce voile 57 est agencé dans le même plan XZ que celui de la paroi intermédiaire 60. Son chant arrière est fixé sur la paroi 56 du premier cadre de fuselage 50a, tandis que son chant inférieur est fixé sur la peau inférieure de fuselage. Enfin, son chant supérieur est biseauté de manière à donner à ce voile 57 une forme générale triangulaire, bien que ce chant supérieur puisse adopter une forme légèrement courbe comme cela a été représenté sur les figures 9 et 9a. Ici également, le voile 57 pourrait être distinct de la paroi intermédiaire 60 qu'il prolonge, ou bien être intégré à celle-ci de façon à former une pièce unique.

La figure 9b illustre avec les flèches la reprise des efforts axiaux effectuée par la structure spécifique à la présente invention, et qui vient d'être décrite ci-dessus.

En outre, la figure 9c montre que la conception adoptée permet de parfaitement implanter des poutres transversales 59 du plancher de la cabine passager, au-dessus des chants supérieurs 61, 63, 65. A cet emplacement, les poutres transversales 59 peuvent aisément se déformer en flexion, et limiter ainsi considérablement les risques de cassures de ces poutres. La déformation est tolérée par l'espace vertical existant entre ces poutres 59 et chaque demi-caisson 14, dont l'empreinte de positionnement 53 sur la paroi intermédiaire 60 a également été représentée sur la figure 9c.

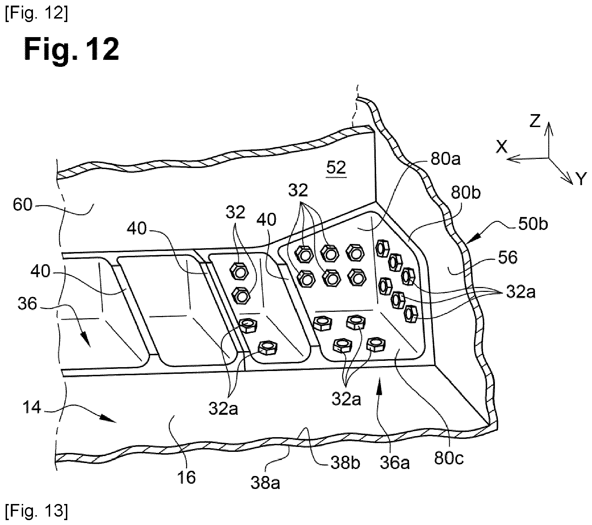

Pour ce qui concerne la reprise des efforts transversaux selon la direction Y, les ferrures de fixation agencées aux extrémités avant et arrière des extrémités intérieures 30 peuvent former des ferrures de coin pour se fixer également sur les parois de cadre 56. L'une de ces ferrures, également dite ferrure de coin de malle, est référencée 36a sur la figure 12. Cette ferrure de coin 36a correspond également à celle référencée sur la figure 9.

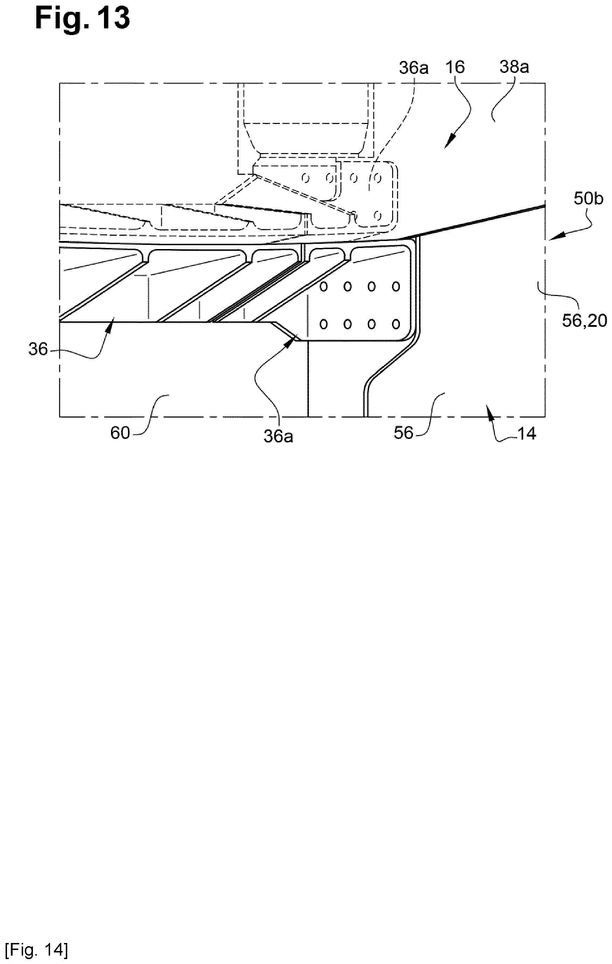

Sur la figure 12, la ferrure 36a est fixée sur la surface extérieure 38b de l'extrémité arrière du longeron supérieur 16, afin de coopérer avec le cadre du milieu 50b. Néanmoins, une telle ferrure peut être implantée à l'avant et/ou à l'arrière, sur le longeron supérieur 16 et/ou sur le longeron inférieur 18, sur la surface intérieure 38a et/ou sur la surface extérieure 38b de chaque demi-caisson 14. De préférence, de telles ferrures 36a de conceptions identiques ou similaires sont prévues dans tous les emplacements précités, de sorte que huit de ces ferrures sont associées à chaque demi-caisson central de voilure 14. A cet égard, la figure 13 représente une autre ferrure de coin 36a située à l'intérieur du demi-caisson 14, et reliant la surface intérieure 38a du demi-caisson 14 à la paroi intermédiaire 60, ainsi qu'à la paroi de cadre 56 du cadre 50b.

De retour à la figure 12, la ferrure de coin 56a comporte tout d'abord une première partie 80a orientée dans un plan XZ, et en appui contre la paroi intermédiaire 60. Cette première partie 80a est traversée par plusieurs boulons de fixation 32, traversant également la paroi intermédiaire 60. Elle comporte également une seconde partie 80b orientée dans un plan YZ, et en appui contre la paroi de cadre 56 du cadre du milieu 50b. Cette seconde partie 80b est traversée par plusieurs boulons additionnels 32a, traversant également la paroi de cadre 56. Enfin, la ferrure de coin 56a comporte une troisième partie 80c orientée dans un plan XY, et en appui contre la surface extérieure du longeron supérieur 16. Cette troisième partie 80c est également traversée par plusieurs boulons additionnels 32a, traversant également le longeron supérieur 16.

Au sein de cette ferrure 36a, qui peut également intégrer une ou plusieurs nervures 40 reliant les première et seconde parties 80a, 80c, les trois parties 80a-80c sont orthogonales entre elles.

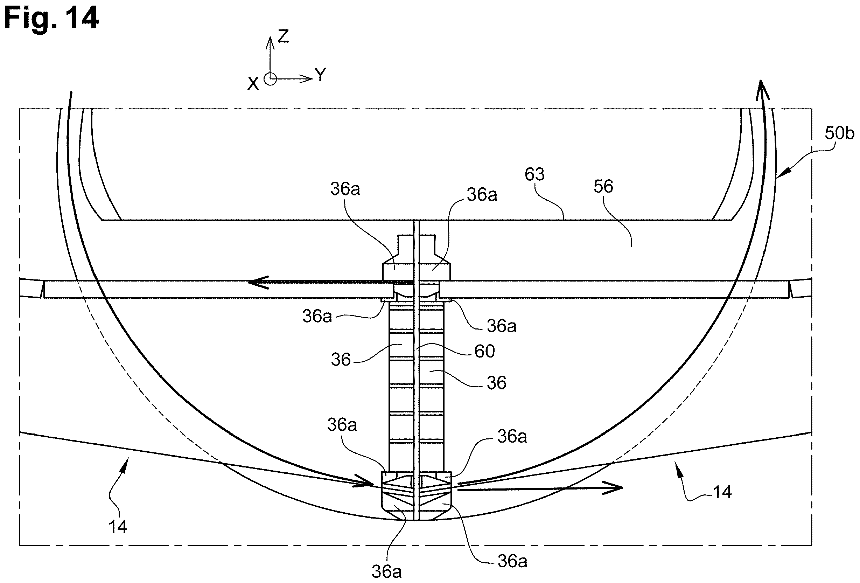

Les ferrures de coin 36a permettent l'introduction des efforts transversaux, s'exerçant selon la direction Y, directement dans les parois 56 des cadres de fuselage 50a, 50b, sans solliciter la paroi intermédiaire 60 de l'ossature de fuselage. Les efforts transversaux sont ensuite diffusés dans les autres parties des cadres de fuselage, puis dans la peau de fuselage. Les flèches de la figure 14 illustrent ce transfert des efforts transversaux des ferrures de coin 36a directement dans la paroi de cadre 56 du cadre de fuselage 50b, puis la diffusion des efforts au sein de ce cadre 56.

Avec cette conception, l'assemblage des deux ailes 2 sur l'ossature de fuselage est réalisé simultanément, à l'aide des boulons de fixation 32 reliant les deux extrémités intérieures 30 l'une à l'autre. Lors de la traversée des extrémités 30 de ces deux demi-caissons centraux de voilure 14, les boulons 32 traversent également la paroi intermédiaire 60 faisant partie intégrante de l'ossature de fuselage. Par conséquent, la fixation des deux ailes 2 l'une sur l'autre, à l'aide des boulons 32, entraîne concomitamment la fixation de ces ailes sur le fuselage 3.

L'assemblage des ailes s'en trouve avantageusement simplifié.

De préférence, chaque aile 2 est assemblée sur l'ossature de fuselage en étant pré-équipée, notamment de ses bords d'attaque et de fuite. Cela permet avantageusement de tester les fonctionnalités associées à l'aile avant son implantation sur l'ossature de fuselage. Néanmoins, ces équipements pourraient alternativement être implantés sur la partie structurale 10 des ailes, seulement après la fixation de cette partie structurale sur l'ossature de fuselage, sans sortir du cadre de l'invention.

Bien entendu, diverses modifications peuvent être apportées par l'homme du métier à l'invention qui vient d'être décrite, uniquement à titre d'exemples non limitatifs, et dont la portée est définie par les revendications jointes en annexe.

## Revendications

1. Aéronef (100) comportant une voilure (2a) comprenant deux ailes (2) présentant chacune un caisson latéral de voilure (12), chaque caisson latéral de voilure étant prolongé vers l'intérieur par un demi-caisson central de voilure (14) présentant une extrémité intérieure (30), et les deux ailes étant fixées l'une sur l'autre à l'aide de boulons de fixation (32) reliant les deux extrémités intérieures (30) des deux demi-caissons centraux de voilure (14),
**caractérisé en ce qu'**il comporte au moins un premier et second cadres de fuselage (50a, 50b) dont chacun présente une partie inférieure en forme de paroi de cadre (56), les deux parois de cadre (56) étant raccordées par une paroi intermédiaire (60) s'inscrivant dans un plan vertical médian (P) de l'aéronef, la paroi intermédiaire (60) étant agencée entre les deux demi-caissons centraux de voilure (14) et traversée par les boulons de fixation (32).

2. Aéronef selon la revendication 1, **caractérisé en ce que** les boulons de fixation (32) sont répartis tout le long des extrémités intérieures (30) des deux demi-caissons centraux de voilure (14).

3. Aéronef selon la revendication 2, **caractérisé en ce que** les extrémités intérieures (30) des deux demi-caissons centraux de voilure (14) présentent chacune une forme générale rectangulaire.

4. Aéronef selon l'une quelconque des revendications précédentes, **caractérisé en ce que** l'extrémité intérieure (30) de chaque demi-caisson central de voilure (14) présente des ferrures de fixation (36, 36a) traversées par les boulons de fixation (32), les ferrures de fixation étant disposées sur une surface intérieure (38a) du demi-caisson central de voilure (14) et sur une surface extérieure (38b) de celui-ci.

5. Aéronef selon l'une quelconque des revendications précédentes, **caractérisée en ce que** chaque aile (2) comporte une nervure transversale intérieure (28) entre son caisson latéral de voilure (12), et son demi-caisson central de voilure (14).

6. Aéronef selon l'une quelconque des revendications précédentes, **caractérisé en ce que** chaque demi-caisson central de voilure (14) présente une section grandissante en allant vers son extrémité intérieure (30).

7. Aéronef selon l'une quelconque des revendications précédentes, **caractérisé en ce qu'**il comprend en outre un troisième cadre de fuselage (50c) dont une partie inférieure est également en forme de paroi de cadre (56), le troisième cadre (50c) étant agencé de sorte que le second cadre (50b) se trouve agencé entre les premier et troisième cadres (50a, 50c) selon une direction longitudinale (X) de l'aéronef, et **en ce que** les deux parois de cadre (56) des second et troisième cadres (50b, 50c) sont raccordées par une paroi intermédiaire (62) s'inscrivant dans le plan vertical médian (P) de l'aéronef.

8. Aéronef selon la revendication 7, **caractérisé en ce que** les deux parois intermédiaires (60, 62) sont deux pièces distinctes l'une de l'autre, agencées de part et d'autre de la paroi de cadre (56) du second cadre (50b), ou **en ce que** les deux parois intermédiaires (60, 62) sont réalisées à l'aide d'une même pièce, de part et d'autre de laquelle sont agencées deux parties de la paroi de cadre (56) du second cadre de fuselage (50b).

9. Aéronef selon l'une quelconque des revendications précédentes combinée à la revendication 4, **caractérisé en ce qu'**au moins l'une des ferrures de fixation (36a) de l'extrémité intérieure (30) de chaque demi-caisson central de voilure (14) comporte :
- une première partie (80a) traversée par au moins l'un desdits boulons de fixation (32) traversant également la paroi intermédiaire (60) ;
- une seconde partie (80b) traversée par au moins un boulon additionnel (32a) traversant également la paroi de cadre (56) de l'un des premier et second cadres (50a, 50b) ;
- une troisième partie (80c) traversée par au moins un boulon additionnel (32a) traversant également un élément de caisson (16) du demi-caisson central de voilure (14),
et **en ce que** les première, seconde et troisième parties (80a-80c) de la ferrure de fixation (36a) sont orthogonales entre elles de manière à former une ferrure de coin.

10. Aéronef selon l'une quelconque des revendications précédentes, **caractérisé en ce que** la paroi de cadre (56) de celui des premier et second cadres de fuselage (50a, 50b) qui se situe le plus en arrière, forme une délimitation avant d'une case de train d'atterrissage principal (54).

11. Aéronef selon l'une quelconque des revendications précédentes, **caractérisé en ce que** chacun des premier et second cadres de fuselage (50a, 50b) est fixé à une plaque de distribution d'efforts (70) présentant des chants latéraux (74) fixés à une peau de fuselage (76).

12. Aéronef selon l'une quelconque des revendications précédentes, **caractérisé en ce que** les boulons de fixation (32) sont orientés parallèlement à une direction transversale (Y) de l'aéronef.

13. Procédé d'assemblage d'un aéronef (100) selon l'une quelconque des revendications précédentes, **caractérisé en ce qu'**il comprend une étape d'assemblage des deux ailes (2) l'une sur l'autre, à l'aide des boulons de fixation (32) reliant les extrémités intérieures (30) des deux demi-caissons centraux de voilure (14), et traversant la paroi intermédiaire (60).

## Patentansprüche

1. Luftfahrzeug (100), aufweisend ein Tragwerk (2a), das zwei Flügel (2) umfasst, die jeweils einen Tragwerkseitenkasten (12) aufweisen, wobei jeder Tragwerkseitenkasten durch einen mittleren Tragwerk-halbkasten (14) nach innen verlängert ist, der ein inneres Ende (30) aufweist, und die beiden Flügel mit Hilfe von Befestigungsbolzen (32) aneinander befestigt sind, die die beiden inneren Enden (30) der beiden mittleren Tragwerkhalbkästen (14) verbinden,
**dadurch gekennzeichnet, dass** es mindestens einen ersten und einen zweiten Rumpfrahmen (50a, 50b) aufweist, die jeweils einen unteren Teil in der Form einer Rahmenwand (56) aufweisen, wobei die beiden Rahmenwände (56) durch eine Zwischenwand (60) verbunden sind, die in einer vertikalen Mittelebene (P) des Luftfahrzeugs liegt, wobei die Zwischenwand (60) zwischen den beiden mittleren Tragwerkhalbkästen (14) angeordnet ist und von den Befestigungsbolzen (32) durchquert wird.

2. Luftfahrzeug nach Anspruch 1, **dadurch gekennzeichnet, dass** die Befestigungsbolzen (32) entlang der gesamten Länge der inneren Enden (30) der beiden mittleren Tragwerkhalbkästen (14) verteilt sind.

3. Luftfahrzeug nach Anspruch 2, **dadurch gekennzeichnet, dass** die inneren Enden (30) der beiden mittleren Tragwerkhalbkästen (14) jeweils eine allgemeine rechteckige Form aufweisen.

4. Luftfahrzeug nach einem der vorhergehenden Ansprüche, **dadurch gekennzeichnet, dass** das innere Ende (30) jedes mittleren Tragwerkhalbkastens (14) Befestigungsbeschläge (36, 36a) aufweist, durch die die Befestigungsbolzen (32) gehen, wobei die Befestigungsbeschläge auf einer Innenfläche (38a) des mittleren Tragwerkhalbkastens (14) und auf einer Außenfläche (38b) von diesem angeordnet sind.

5. Luftfahrzeug nach einem der vorhergehenden Ansprüche, **dadurch gekennzeichnet, dass** jeder Flügel (2) eine innere Querrippe (28) zwischen seinem Tragwerkseitenkasten (12) und seinem mittleren Tragwerkhalbkasten (14) aufweist.

6. Luftfahrzeug nach einem der vorhergehenden Ansprüche, **dadurch gekennzeichnet, dass** jeder mittlere Tragwerkhalbkasten (14) einen Querschnitt aufweist, der zu seinem inneren Ende (30) hin zunimmt.

7. Luftfahrzeug nach einem der vorhergehenden Ansprüche, **dadurch gekennzeichnet, dass** es ferner einen dritten Rumpfrahmen (50c) umfasst, von dem ein unterer Teil ebenfalls in der Form einer Rahmenwand (56) ist, wobei der dritte Rahmen (50c) so angeordnet ist, dass sich der zweite Rahmen (50b) entlang einer Längsrichtung (X) des Luftfahrzeugs zwischen dem ersten und dem dritten Rahmen (50a, 50c) befindet, und dass die beiden Rahmenwände (56) des zweiten und des dritten Rahmens (50b, 50c) durch eine Zwischenwand (62) verbunden sind, die in der vertikalen Mittelebene (P) des Luftfahrzeugs liegt.

8. Luftfahrzeug nach Anspruch 7, **dadurch gekennzeichnet, dass** die beiden Zwischenwände (60, 62) zwei voneinander verschiedene Teile sind, die beiderseits der Rahmenwand (56) des zweiten Rahmens (50b) angeordnet sind, oder dass die beiden Zwischenwände (60, 62) mittels ein und desselben Teils ausgeführt sind, an dessen beiden Seiten zwei Teile der Rahmenwand (56) des zweiten Rumpfrahmens (50b) angeordnet sind.

9. Luftfahrzeug nach einem der vorhergehenden Ansprüche, kombiniert mit Anspruch 4, **dadurch gekennzeichnet, dass** mindestens einer der Befestigungsbeschläge (36a) des inneren Endes (30) jedes mittleren Tragwerkhalbkastens (14) Folgendes aufweist:
- einen ersten Teil (80a), durch den mindestens einer der Befestigungsbolzen (32) geht, die auch durch die Zwischenwand (60) gehen,
- einen zweiten Teil (80b), durch den mindestens ein zusätzlicher Bolzen (32a) geht, der auch durch die Rahmenwand (56) eines des ersten und zweiten Rahmens (50a, 50b) geht,
- einen dritten Teil (80c), durch den mindestens ein zusätzlicher Bolzen (32a) geht, der auch durch ein Kastenelement (16) des mittleren Tragwerkhalbkastens (14) geht,
und dass der erste, der zweite und der dritte Teil (80a - 80c) des Befestigungsbeschlags (36a) zueinander orthogonal sind, so dass sie einen Eckbeschlag bilden.

10. Luftfahrzeug nach einem der vorhergehenden Ansprüche, **dadurch gekennzeichnet, dass** die Rahmenwand (56) jenes des ersten und des zweiten Rumpfrahmens (50a, 50b), der am weitesten hinten angeordnet ist, eine vordere Begrenzung eines Hauptfahrwerkschafts (54) bildet.

11. Luftfahrzeug nach einem der vorhergehenden Ansprüche, **dadurch gekennzeichnet, dass** der erste und der zweite Rumpfrahmen (50a, 50b) jeweils an einer Lastverteilungsplatte (70) befestigt ist, die an einer Rumpfhaut (76) befestigte Seitenkanten (74) aufweist.

12. Luftfahrzeug nach einem der vorhergehenden Ansprüche, **dadurch gekennzeichnet, dass** die Befestigungsbolzen (32) parallel zu einer Querrichtung (Y) des Luftfahrzeugs ausgerichtet sind.

13. Verfahren zur Montage eines Luftfahrzeugs (100) nach einem der vorhergehenden Ansprüche, **dadurch gekennzeichnet, dass** es einen Schritt der Montage der beiden Flügel (2) aneinander mit Hilfe von Befestigungsbolzen (32) umfasst, die die inneren Enden (30) der beiden mittleren Tragwerkhalbkästen (14) verbinden und durch die Zwischenwand (60) gehen.

## Claims

1. An aircraft (100) including a wing unit (2a) comprising two wings (2) each having a lateral wing box (12), each lateral wing box being extended toward the interior by a center wing box half (14) having an interior end (30), and the two wings being attached to one another using attachment bolts (32) linking the two interior ends (30) of the two center wing box halves (14),
**characterized in that** it includes at least a first and second fuselage frame (50a, 50b), each of which has a lower part in frame wall (56) form, the two frame walls (56) being connected by an intermediate wall (60) falling within a vertical midplane (P) of the aircraft, the intermediate wall (60) being arranged between the two center wing box halves (14) and crossed by the attachment bolts (32).

2. The aircraft as claimed in claim 1, **characterized in that** the attachment bolts (32) are distributed entirely along the interior ends (30) of the two center wing box halves (14).

3. The aircraft as claimed in claim 2, **characterized in that** the interior ends (30) of the two center wing box halves (14) each have a rectangular general shape.

4. The aircraft as claimed in any one of the preceding claims, **characterized in that** the interior end (30) of each center wing box half (14) has attachment fittings (36, 36a) through which the attachment bolts (32) pass, the attachment fittings being placed on an interior surface (38a) of the center wing box half (14) and on an exterior surface (38b) thereof.

5. The aircraft as claimed in any one of the preceding claims, **characterized in that** each wing (2) includes an interior transverse rib (28) between the lateral wing box (12) thereof, and the center wing box half (14) thereof.

6. The aircraft as claimed in any one of the preceding claims, **characterized in that** each center wing box half (14) has a section which enlarges with proximity to the interior end (30) thereof.

7. The aircraft as claimed in any one of the preceding claims, **characterized in that** it further comprises a third fuselage frame (50c), a lower part of which is also in frame wall (56) form, the third frame (50c) being arranged such that the second frame (50b) is arranged between the first and the third frames (50a, 50c) according to a longitudinal direction (X) of the aircraft, and **in that** the two frame walls (56) of the second and third frames (50b, 50c) are connected by an intermediate wall (62) falling within the vertical midplane (P) of the aircraft.

8. The aircraft as claimed in claim 7, **characterized in that** the two intermediate walls (60, 62) are two pieces separate from one another, arranged on either side of the frame wall (56) of the second frame (50b), or **in that** the two intermediate walls (60, 62) are produced using a same piece, on either side of which two parts of the frame wall (56) of the second fuselage frame (50b) are arranged.

9. The aircraft as claimed in any one of the preceding claims in combination with claim 4, **characterized in that** at least one of the attachment fittings (36a) of the interior end (30) of each center wing box half (14) includes:
- a first part (80a) through which at least one of said attachment bolts (32) also passing through the intermediate wall (60), passes;
- a second part (80b) through which at least one additional bolt (32a) also passing through the frame wall (56) of one of the first and second frames (50a, 50b), passes;
- a third part (80c) through which at least one additional bolt (32a) also passing through a box element (16) of the center wing box half (14), passes,
and **in that** the first, second and third parts (80a-80c) of the attachment fitting (36a) are orthogonal with respect to one another such as to form a corner fitting.

10. The aircraft as claimed in any one of the preceding claims, **characterized in that** the frame wall (56) of the frame of the first and second fuselage frames (50a, 50b) which is located the most rearward, forms a front demarcation of a main-landing-gear compartment (54).

11. The aircraft as claimed in any one of the preceding claims, **characterized in that** each of the first and second fuselage frames (50a, 50b) is attached to a load distributing plate (70) having lateral edges (74) attached to a fuselage skin (76).

12. The aircraft as claimed in any one of the preceding claims, **characterized in that** the attachment bolts (32) are oriented parallel to a transverse direction (Y) of the aircraft.

13. A method for assembling an aircraft (100) as claimed in any one of the preceding claims, **characterized in that** it comprises a step for assembling the two wings (2) to one another, using the attachment bolts (32) linking the interior ends (30) of the two center wing box halves (14), and passing through the intermediate wall (60).
